**Europäisches Patentamt**

**European Patent Office**

**Office européen des brevets**

(19)

(11) Veröffentlichungsnummer: **0 151 747**
**A1**

(12) **EUROPÄISCHE PATENTANMELDUNG**

(21) Anmeldenummer: **84115341.4**

(22) Anmeldetag: **13.12.84**

(51) Int. Cl.⁴: **C 02 F 11/12**
**C 02 F 1/52, G 05 D 21/02**

(30) Priorität: **23.12.83 DE 3346834**

(43) Veröffentlichungstag der Anmeldung:
**21.08.85 Patentblatt 85/34**

(84) Benannte Vertragsstaaten:
**AT BE CH DE FR GB IT LI LU NL SE**

(71) Anmelder: **ALLIED COLLOIDS MANUFACTURING
GMBH
Deelböge 5-7
D-2000 Hamburg 60(DE)**

(72) Erfinder: **Geradts, Günter
Oberstrasse 2
D-4174 Issum 2/Sevelen(DE)**

(74) Vertreter: **Vogeser, Werner, Dipl.-Ing. et al,
Patentanwälte Hansmann & Vogeser
Albert-Rosshaupter-Strasse 65
D-8000 München 70(DE)**

(54) **Verfahren und Anlage zum Entwässern von Klärschlamm.**

(57) Die vorliegende Erfindung bezieht sich auf ein Verfahren zum kontinuierlichen Entwässern von Klärschlamm, bei dem der Klärschlamm in Abhängigkeit von der pro Zeiteinheit anfallenden Klärschlammenge mittels eines Flockungshilfsmittels vorbehandelt und zur Entwässerung mittels einer Förderpumpe (12) einer Kammerfilterpresse (11) zugeführt wird. Um eine wirtschaftliche Schlammentwässerung mit möglichst geringen Flockungshilfsmittelmengen durchfüh- ren zu können, wird das Flockungshilfsmittel (18) dem Klärschlamm auf der Druckseite der Förderpumpe zugeführt und die Dosierung des Flockungshilfsmittels zusätzlich zur Abhängigkeit von der Klärschlammenge (13) auch in Abhän- gigkeit von der momentanen Klärschlammdichte (14) getä- tigt. Des weiteren beschreibt die Anmeldung die Anlage zur Durchführung des erfindungsgemäßen Verfahrens.

EP 0 151 747 A1

0151747

## Verfahren und Anlage zum Entwässern von Klärschlamm

Die Erfindung betrifft ein Verfahren entsprechend dem Oberbegriff des Anspruchs 1.

Aus der Zeitschrift "Umwelt", 1983/3; S. 231, 232, 235, 236, 240, 242 und 244 ist die Verwendung synthetischer polymerer organischer Flockungsmittel ohne anorganische Filterhilfsmittel bei der Klärschlammentwässerung bekannt. Diese Art der Entwässerung bezieht sich jedoch nur auf Abwässer, die einen hohen Anteil an anorganischen körnigen Stoffen enthalten. Bei Abwässern von der Art kommunaler Abwässer erhält man jedoch bei Verwendung solcher Flockungsmittel keinen festen Filterkuchen in Kammerfilterpressen. Dies ergibt sich aus dem Vergleichsbeispiel 2 der EP-PS 0 019 176. Auch die Ausführungen in Spalte 5, Zeilen 9-15 der EP-PS 0 019 176 weisen in diese Richtung.

Der Erfindung liegt die Aufgabe zugrunde, das Verfahren der eingangs genannten Art so auszubilden, daß sich eine wirtschaftliche Schlammentwässerung mit möglichst geringen Mengen an synthetischen, polymeren, organischen Flockungshilfsmitteln durchführen läßt.

Gelöst wird diese Aufgabe gemäß der Erfindung durch die im kennzeichnenden Teil des Anspruchs 1 angegebenen Merkmale. Eine Anlage zur Durchführung dieses Verfahrens ist im Anspruch 2 angegeben.

Durch dieses Verfahren und bei dieser Anlage gelangt man zu einer zu jedem Zeitpunkt auf die Feststoffmenge des zu entwässernden Schlamms bezogenen Flockungshilfsmitteldosierung, die beim Einsatz von synthetischen Flockungshilfsmitteln wichtig ist, da im Gegensatz zu anorganischen Flockugnsmitteln die Dosierung stärker vom Trockensubstanzgehalt abhängt, und es bei einer Abweichung von der optimalen Dosierung zu keiner nennenswerten Wasserabgabe mehr kommt, weil sich die Filtertücher zusetzen.

Der Einsatz von synthetischen Flockungshilfsmitteln empfiehlt sich vor allem dann, wenn es sich um normal vorbehandelbare Schlämme mit nicht zu hohen Trockensubstanzgehalten handelt. Schlämme mit hohen Trockensubstanzgehalten lassen sich kostengünstiger nach konventionellen Verfahren entwässern, jedoch produzieren moderne kommunale Kläranlagen mit vollbiologischer Abwasserreinigung überwiegend Schlämme mit niedrigen Trockensubstanzgehalten und eignen sich daher von der Wirtschaftlichkeit her besonders für den Einsatz von synthetischen Flockungshilfsmitteln. Ein weiterer, wesentlicher Faktor zur Betriebskostensenkung ist die erhebliche Verminderung des zu entsorgenden Filterkuchens, da die eingebrachte Menge synthetischer Flockungshilfsmittel sehr gering ist. Abfuhr- und Deponiekosten lassen sich dadurch in der Regel gegenüber konventionellen Verfahren um ca. 15 - 30 % reduzieren.

Die mechanisch geringe Stabilität der durch synthetische Flockungshilfsmittel gebildeten Flocken wirkt sich nicht von Nachteil aus, da die Flockungshilfsmittel auf der Druckseite der Förderpumpe zugesetzt werden, so daß die Flocken durch den Pumpvorgang nicht mehr beeinträchtigt werden können.

Durch die Erfassung der Schlammdurchsatzmenge, der Schlammdichte und der Flockungshilfsmittelmenge durch entsprechende Meßeinrichtungen und Auswertung der Meßergebnisse in einem Regler kann über eine Flockungshilfsmittel-Förderpumpe die für den jeweiligen Fall optimale Flockungshilfsmittelmenge erreicht werden.

Dieser Optimierungsvorgang beruht auf der Erkenntnis, daß jeder Schlamm zu seiner chemischen Vorbehandlung mittels synthetische Flockungshilfsmittel eine bestimmte spezifische Flockungshilfsmittelmenge bezogen auf den Trockensubstanzgehalt des Schlammes benötigt. Dieser einmal zu ermittelnde Wert ist über einen sehr weiten Bereich konstant, was bedeutet, daß die einzusetzende Flockungshilfsmittelmenge ausschließlich von der Feststoffmenge abhängt. Diese Tatsache wird bei der chemischen Vorbehandlung im Rahmen der Erfindung berücksichtigt, so daß optimale technische und wirtschaftliche Resultate erzielt werden können.

Über die kontinuierlich durchgeführte Messung der Schlamm- und Flockungshilfsmittelmenge werden einem elektronischen Regler zwei mengenabhängige Signale zugeführt. Das Signal der Schlammengenmessung wird als Führungsgröße verwendet.

Der Regler vergleicht nun das Signal der Führungsgröße und das der Flockungshilfsmittel-Mengenmessung und reguliert bei Abweichung die Leistung der Flockungshilfsmittelpumpe nach. Das Verhältnis von Schlammenge zu Flockungshilfsmittelmenge wird dabei durch eine im Regler erzeugte Verhältnisvorgabe eingestellt. Diese Verhältnisvorgabe wiederum wird aus dem Signal erzeugt, das zum Feststoffgehalt des Naßschlamms proportional ist und durch kontinuierliche Messung der Schlammdichte erzeugt wird. Es erfolgt somit eine kontinuierliche, stets dem speziellen Bedarf an Flockungshilfsmitteln entsprechende Zugabe von Flockungshilfsmittellösung auf der Druckseite der Schlammförderpumpe.

Unterschiedliche Förderleistungscharakteristika, wie sie z.B. beim Stand der Technik auftreten, wenn man zum Fördern des Schlammes und zum Fördern des Flockungshilfsmittels zwei Pumpen verwendet, die in einem festen Leistungsverhältnis zueinander stehen, schwankender Trockensubstanzgehalt im Naßschlamm während einer Preßcharge, sowie durch sich ändernden druck- und filterwiderstandsbedingte Einflüsse, werden durch das erfindungsgemäße Verfahren ausgeschaltet.

0151747

Die Zugabestelle für das Flockungshilfsmittel läßt sich
für den jeweils zu entwässernden Schlamm durch Untersuchungen einmal festlegen.

Die erzielbaren Vorteile lassen sich wie folgt zusammenfassen:

Es kommen ausschließlich organische Flockungshilfsmittel
nicht aber irgendwelche Hilfsstoffe, wie z.B., Eisen oder
Aluminiumsalze, Kalk, Kalksteinmehl oder dergleichen zum
Einsatz.

Zum Fördern des Schlammes und des Flockungshilfsmittels
können alle Arten von Pumpen verwendet werden, insbesondere Kolbenmembranpumpen zum Fördern des Schlammes, die
eine hohe Leistung haben, deren Leistung jedoch mit dem
zunehmenden Filterwiderstand der nachgeschalteten Kammerfilterpresse abnimmt. Es können auch andere Pumpen verwendet werden, bei denen keine Leistungsminderung bei
zunehmendem Filterwiderstand auftritt, jedoch muß dann
die Fördermenge der Pumpe kontinuierlich über eine Druckmeßeinrichtung geregelt werden, die druckseitig in die
Schlammförder-Hauptleitung geschaltet ist.

Es läßt sich für den jeweiligen Fall eine optimale
Flockungshilfsmittelkonzentration bestimmen, so daß stets
bei günstigem Filterwiderstand der Kammerfilterpresse gearbeitet werden kann. Unterschiedliche Trockensubstanzgehalte im Schlamm erfordern keine Veränderung der Lösungskonzentration des Flockungshilfsmittels.

Es erfolgt eine konstante und kontinuierliche Zugabe des
Flockungshilfsmittels bezogen auf den speziellen Flockungshilfsmittelbedarf in kg Flockungshilfsmittel pro Tonne
Trockensubstanz. Der Flockungshilfsmitteleinsatz kann daher
bei optimalen technischen Ergebnissen kostengünstig erfolgen.

**0151747**

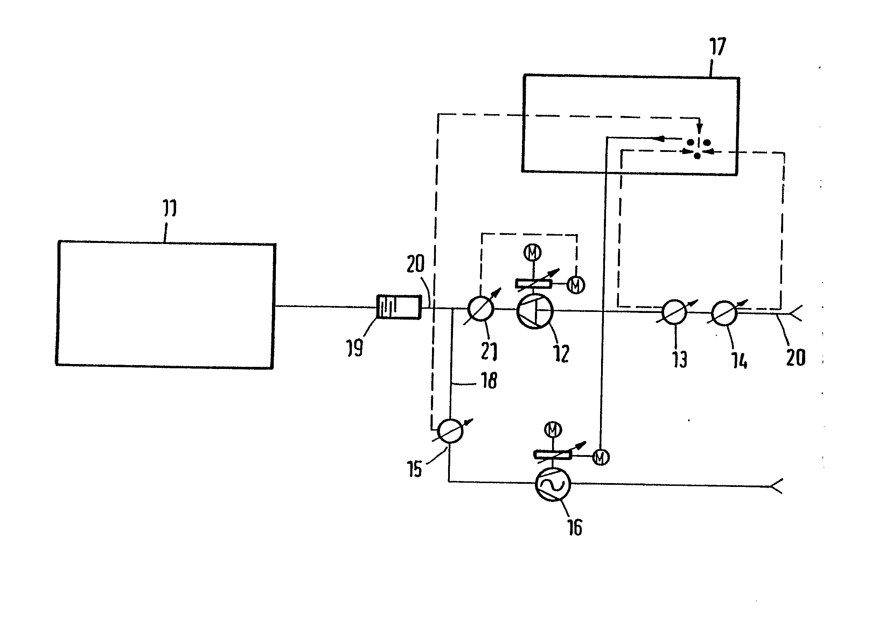

Die Erfindung wird nachstehend anhand der beiliegenden Zeichnung beispielsweise erläutert.

Der zu entwässernde Schlamm wird von einer Klärschlamm-Förderpumpe 12, die zweckmäßigerweise eine Kolbenmembranpumpe sein kann, von einem Sammelbehälter, in dem er zwischengelagert wird, in eine Hauptleitung 20 gesaugt und zu einer Kammerfilterpresse 11 gepumpt.

Über eine saugseitig der Klärschlamm-Förderpumpe 12 in die Hauptleitung 20 geschaltete Klärschlamm-Mengenmeßeinrichtung 13 wird die geförderte Schlammenge kontinuierlich gemessen. Der Meßbereich kann sich z.B. von 0 - 100 m³/h erstrecken. Gemäß der geförderten Menge erzeugt die Klärschlamm-Mengenmeßeinrichtung 13 ein Ausgangssignal von z.B. 0 - 20 Milliampere. Dieses Ausgangssignal dient einem Dreipunktregler 17 als Führungsgröße.

Zur Vorbehandlung des Schlammes wird auf der Druckseite der Klärschlamm-Förderpumpe 12 über eine Zusatzleitung 18 Flockungshilfsmittel in den Schlamm eingebracht. Das Flockungshilfsmittel wird von einem nicht gezeigten Vorratsbehälter zum Beispiel in Form einer 0,2%igen Lösung mittels einer Flockungsmittel-Förderpumpe 16 gefördert. Auf der Druckseite dieser Flockungsmittel-Förderpumpe 16 ist in die Zusatzleitung 18 eine Flockungsmittel-Meßeinrichtung 15 eingebaut, die die Flockungshilfsmittelmenge mißt und ebenfalls ein Ausgangssignal von z.B. 0 - 20 Milliampere erzeugen kann, wobei ein Meßbereich von 0 - 10 m³/h einstellbar ist.

Der Dreipunktregler 17 vergleicht die Ausgangssignale der Klärschlamm-Mengenmeßeinrichtung 13 und der Flockungsmittel-Mengenmeßeinrichtung 15 und regelt bei Abweichung die Leistung der Flockungshilfsmittel-Förderpumpe 16 nach. Das erforderliche Verhältnis zwischen Schlammenge und Flockungshilfsmittelmenge ist über einen weiten Bereich z.B. 1:5 bis 1:20 einstellbar.

Entscheidend ist nun, daß das mengenmäßige Verhältnis von Schlammenge zu Flockungshilfsmittelmenge vom Dreipunktregler 17 bestimmt wird. Diese Verhältnisvorgabe wird mittels eines Signals reguliert, das proportional zum Feststoffgehalt des Schlammes ist und das durch eine Klärschlammdichte-Meßeinrichtung 14 erzeugt wird, welche ebenfalls in die Hauptleitung 20 eingebaut ist. Dadurch kann eine kontinuierliche, ständig dem speziellen Flockungshilfs-mittelbedarf entsprechende Zugabe der Flockungshilfs-mittellösung auf der Druckseite der Klärschlamm-Förderpumpe 12 über die gesamte Preßchargenzeit der Kammerfilterpresse 11 erfolgen. Auch für die Klärschlamm-Dichtenmeßeinrichtung 14 kann wieder ein Ausgangssignalbereich von 0 - 20 Milliampere angewandt werden.

Statt der Kolbenmembranpumpe 12, deren Förderleistung sich bei zunehmendem Druck der Kammerfilterpresse automatisch verringert, kann auch irgendeine nach dem Prinzip der Zwangsverdrängung ohne eigene druckabhängige Mengenregelung arbeitende Pumpe verwendet werden. In diesem Falle muß aber kontinuierlich eine Mengenregelung durchgeführt werden, was mittels einer Druckmeßeinrichtung 21 erfolgen kann, die druckseitig in die Hauptleitung 20 geschaltet ist.

Mit der beschriebenen Anlage ist es zum Beispiel möglich, ein Faulschlammgemisch wechselnder Zusammensetzung zu entwässern, das in einer Menge von ca. 1.600 $m^3$/Woche anfällt. Der Trockensubstanzgehalt schwankt überlicherweise im Bereich von 2 - 3 %, darüber liegende Werte treten nur selten auf. Die Entwässerung kann mittels einer Kammerfilterpresse mit einem Kammervolumen von etwa 12 $m^3$ erfolgen.

0151747

Die Mischung der Flockungshilfsmittellösung und des Naßschlammes erfolgt mittels eines Mischers 19 zum Beispiel in Form von zwei um 180° versetzte Plattenschieber, deren Einstellung eine mehr oder weniger starke Mischung zwischen Schlamm und Flockungshilfsmittellösung ergibt.

Das sich bei einer solchen Entwässerung ergebende Filtrat hat einen relativ neutralen pH-Wert von etwa 7,6 und es werden Trockensubstanzgehalte von 35 % und mehr erreicht.

Der der Kammerfilterpresse entnommene Filterkuchen zeigt ein gutes Transport- und Deponieverhalten. Bei einer Deponierung von über 12 Monaten trocknet der aufgeschüttete Filterkuchen an der Oberfläche bis zu einer Tiefe von etwa 20 cm bis auf einen Trockensubstanzgehalt von etwa 80%, während sich im Inneren der Halde keine Veränderungen in Bezug auf die Trockensubstanz gegenüber den Ausgangswerten ergibt. Es erfolgt weder eine Wasseraufnahme durch Regen, noch eine Nachtrocknung durch Sonneneinwirkung, mit Ausnahme der Oberfläche. Der Schüttkegel der Halde verändert sich über zwölf Monate ebenfalls nicht.

Zwischen der Schlammdichte-Meßeinrichtung 14 und dem Dreipunktregler 17 kann ein Linearisator angeordnet sein, der das Ausgangssignal der Schlammdichte-Meßeinrichtung 14 korrigiert. Der Grund hierfür liegt darin, daß, wenn z.B. für einen bestimmten Schlamm 200 g Flockungshilfsmittel pro m³ Schlamm erforderlich sind, und sich der Trockensubstanzgehalt und damit auch die Schlammdichte verdoppelt, die Flockungsmittel-Förderpumpe 16 veranlaßt werden würde, 400g Flockungshilfsmittel zuzusetzen, was aber praktisch nicht erforderlich ist. Z.B. kann es erforderlich sein, daß die Flockungshilfsmittelmenge nur um etwa 50% erhöht wird; diese nicht lineare Änderung wird durch den Linearisator berücksichtigt.

Verfahren und Anlage zum Entwässern von Klärschlamm

PATENTANSPRÜCHE

1. Verfahren zum kontinuierlichen Entwässern von Klärschlamm, bei dem der Klärschlamm in Abhängigkeit von der pro Zeiteinheit anfallenden Klärschlammenge mittels eines Flockungshilfsmittels vorbehandelt und zur Entwässerung mittels einer Förderpumpe einer Kammerfilterpresse zugeführt wird, dadurch gekennzeichnet, daß

a) das Flockungshilfsmittel dem Klärschlamm auf der Druckseite der Förderpumpe zugesetzt wird, und

b) die Dosierung des Flockungshilfsmittels zusätzlich zur Abhängigkeit von der Klärschlammenge auch in Abhängigkeit von der momentanen Klärschlammdichte erfolgt.

2. Klärschlamm-Entwässerungsanlage zur Durchführung des Verfahrens nach Anspruch 1, bestehend aus einer Kammerfilterpresse, einer Klärschlammförderpumpe, einer Klärschlamm-Mengenmeßeinrichtung, einer Flockungshilfsmittel-Mengenmeßeinrichtung und einer Flockungshilfsmittel-Förderpumpe, dadurch gekennzeichnet, daß die Flockungshilfsmittel-Förderpumpe (16) auf der Druckseite der Klärschlamm-Förderpumpe (12) an die den Klärschlamm führende Hauptleitung (20) angeschlossen ist, daß in die Hauptleitung (20) vor der Klärschlamm-Förderpumpe (12) zusätzlich zur Klärschlamm-Mengenmeßeinrichtung (13) eine Klärschlamm-Dichtemeßeinrichtung (14) geschaltet ist, und daß die Flockungshilfsmittel-Mengenmeßeinrichtung (15), die Klärschlamm-Mengenmeßeinrichtung (13) und die Klärschlamm-Dichtemeßeinrichtung (14) auf einen Dreipunktregler (17) arbeiten, der die Förderleistung der Flockungshilfsmittel-Förderpumpe (16) reguliert.

3.    Anlage nach Anspruch 2, d a d u r c h   g e k e n n z e i c h n e t ,   d a ß die Klärschlamm-Förderpumpe (12) eine Kolbenmembranpumpe ist.

4.    Anlage nach Anspruch 2, d a d u r c h   g e k e n n z e i c h n e t ,   d a ß die Klärschlamm-Förderpumpe eine Pumpe nach dem Prinzip der Zwangsverdrängung ohne eigene druckabhängige Mengenregelung ist, und daß zur kontinuierlichen Mengenregelung eine Druckmeßeinrichtung druckseitig in die Hauptleitung (20) geschaltet ist.

5.    Anlage nach Anspruch 2 oder 3, g e k e n n z e i c h n e t   d u r c h einen in die Hauptleitung (20) geschalteten Mischer (19) zum Mischen des Klärschlamms und des Flockungshilfsmittels.

6.    Anlage nach einem oder mehreren der Ansprüche 2 bis 5, d a d u r c h   g e k e n n z e i c h n e t ,   d a ß zwischen der Klärschlamm-Dichtemeßeinrichtung (14) und dem Dreipunkt-Regler (17) ein Linearisator angeordnet ist, der das Schlammdichte-Meßsignal proportional zu der für den jeweiligen Schlamm tatsächlich erforderlichen Flockungshilfsmittelmenge korrigiert.

0151747

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 407 174 (SOMAT) <br> * Seite 1, Absatz 1; Seite 3, Zeile 15 - Seite 5, Zeile 4; Seite 8, Zeile 31 - Seite 9, Zeile 26 * <br><br> --- | 1,2,5 | C 02 F 11/12 <br> C 02 F 1/52 <br> G 05 D 21/02 |
| Y | DE-A-2 353 874 (F.H. SCHULE) <br> * Seite 1, Absatz 1; Seiten 2,3 * <br><br> --- | 1,2,5 | |
| Y | AUFBEREITUNGS-TECHNIK, Band 15, Nr. 4, April 1974, Seiten 187-193, Wiesbaden, DE; J. REUTER: "Möglichkeiten zur Automatisierung des Betriebes von Kläreindickern in Aufbereitungsanlagen durch Anwendung organischer synthetischer Flockungsmittel" <br> * Seite 192, Absatz 4.1.3; Seite 191, Absätze 4.1.1 und 4.1.2 * <br><br> --- | 1,2,5 | RECHERCHIERTE SACHGEBIETE (Int. Cl.4) |
| A | CHEMICAL ENGINEERING, 19. März 1962, Seiten 155-158, McGraw-Hill, New York, US; F.G. SHINSKEY: "Controls for non-linear processes" <br> * Seite 155 * <br><br> --- | 6 | C 02 F <br> G 05 D |
| A | CONTROL ENGINEERING, Band 16, Nr. 3, März 1969, Seite 116, Abschnitt 620, New York, US; "pH control system makes logarithmic calculations" <br><br> ----- | 6 | |

Der vorliegende Recherchenbericht wurde für alle Patentansprüche erstellt.

| Recherchenort | Abschlußdatum der Recherche | Prüfer |
|---|---|---|
| DEN HAAG | 08-03-1985 | TEPLY J. |